# EUROPEAN PATENT APPLICATION

(11) **EP 4 443 885 A1**
(43) Date of publication of application: **09.10.2024**
(21) Application number: 22909973.4
(22) Date of filing: 20.12.2022
(51) Int. Cl.: H04N 21/2187, H04N 21/431

(54) **RESOURCE PROCESSING METHOD AND APPARATUS FOR LIVE STREAMING STUDIO, DEVICE, AND STORAGE MEDIUM**

(30) Priority: 20.12.2021 CN 202111567039
(71) Applicant: Beijing Zitiao Network Technology Co., Ltd., Beijing 100190 (CN)
(72) Inventor: YANG, Can, Beijing 100086 (CN); LIU, Wenjing, Beijing 100086 (CN)
(74) Representative: Dentons UK and Middle East LLP
(86) International application number: PCT/CN2022/140255
(87) International publication number: WO 2023/116661

(57) **Abstract**

The present disclosure provides a resource processing method and apparatus for a live room, a device, and a storage medium, the method comprising: in response to a trigger operation for a target resource, presenting a resource enabling dynamic effect on a live page, which is used to prompt that the target resource is currently being enabled; and then presenting object change information of a current live room in a preset object presentation area on the live page, wherein the object change information is determined based on the target resource.

## Description

The present application is based on and claims priority to the Chinese Patent Application No. 202111567039.8, filed on December 20, 2021, the disclosure of which is incorporated by reference herein in its entirety.

### TECHNICAL FIELD

The present disclosure relates to the field of data processing, and in particular to a resource processing method and apparatus for a live room, a device, and a storage medium.

### BACKGROUND

With the continuous development of video live technology, people have more and more diverse demands for live-room related functions.

### Summary

According to some embodiments of the present disclosure, in a first aspect, the present disclosure provides a resource processing method for a live room, the method comprising:
presenting a resource enabling dynamic effect on a live page in response to a trigger operation for a target resource, wherein the resource enabling dynamic effect is used to prompt that the target resource is currently being enabled;
presenting object change information of a current live room in a preset object presentation area on the live page, wherein the object change information is determined based on the target resource.

In one implementation, prior to the presenting object change information of a current live room in a preset object presentation area on the live page, there further comprises:
in response to a trigger operation for a resource presentation control on the live page or a preset sliding operation for the live page, displaying a mask layer on the live page, and presenting resources corresponding to the current live room on the mask layer.

In one implementation, the method further comprises:
in response that there exist resources corresponding to the current live room, when it is determined that a live duration of the current live room reaches a preset live duration or when it is determined that an object of the current live room satisfies a preset condition, presenting a resource prompt dynamic effect on the live page, wherein the resource prompt dynamic effect is used to prompt that there currently exist available resources.

In one implementation, subsequent to the presenting object change information of a current live room in a preset object presentation area on the live page, there further comprises:
in response to a trigger operation for the object presentation area, displaying a floating window on the live page, and presenting object data change trend information of the current live room on the floating window, wherein the object data change trend information is used to reflect object data change trends of the current live room before and after the target resource is applied thereto.

In one implementation, prior to the presenting object change information of a current live room in a preset object presentation area on the live page, there further comprises:
in response to the trigger operation for the target resource, presenting an obj ect change prompt dynamic effect in the preset obj ect presentation area on the live page, wherein the object change prompt dynamic effect is used to prompt that the object change information starts to be presented.

In one implementation, the method further comprises:
when it is determined that an application duration of the target resource reaches a preset application duration threshold, hiding the object change information presented in the object presentation area;
in response to a trigger operation for the object presentation area, displaying the floating window on the live page, and presenting object growth result data of the current live room on the floating window, wherein the object growth result data is used to characterize the growth of object data of the current live room after the target resource is applied thereto.

In one implementation, the presenting a resource enabling dynamic effect on a live page in response to a trigger operation for a target resource comprises:
in response to the trigger operation for the target resource, presenting a resource identifier in a preset area on the live page, and controlling the resource identifier to move from the preset area to the object presentation area.

In a second aspect, the present disclosure provides a resource processing apparatus for a live room, the apparatus comprising:
a first presentation module configured to present a resource enabling dynamic effect on a live page in response to a trigger operation for a target resource, wherein the resource enabling dynamic effect is used to prompt that the target resource is currently being enabled;
a second presentation module configured to present object change information of a current live room in a preset object presentation area on the live page, wherein the object change information is determined based on the target resource.
In a third aspect, the present disclosure provides a computer-readable storage medium storing instructions thereon, wherein the instructions, when executed on a terminal device, cause the terminal device to implement the method described above.
In a fourth aspect, the present disclosure provides a device comprising: a memory, a processor, and a computer program stored on the memory and executable on the processor, wherein the processor, when executing the computer program, implements the method described above.

In a fifth aspect, the present disclosure provides a computer program product comprising computer programs/instructions which, when executed by a processor, implement the method described above.

### Brief description of the drawings

The accompanying drawings, which are incorporated in and constitute a part of this specification, illustrate embodiments consistent with the present disclosure and, together with the description, serve to explain the principles of the present disclosure.

In order to more clearly illustrate the embodiments of the present disclosure or technical solutions in the related art, the drawings used in the description of the embodiments or related art will be briefly described below, and apparently, based on these drawings, those skilled in the art can obtain other drawings without inventive labor.
FIG. 1 is a flowchart of a resource processing method for a live room provided by an embodiment of the present disclosure;
FIG. 2 is a schematic view of a live page provided by an embodiment of the present disclosure;
FIG. 3 is a schematic diagram of a presentation page of resources corresponding to a current live room provided by an embodiment of the present disclosure;
FIG. 4 is a schematic view of another live page provided by an embodiment of the present disclosure;
FIG. 5 is a schematic diagram of a presentation page of an obj ect data change trend graph provided by an embodiment of the present disclosure;
FIG. 6 is a schematic structural diagram of a resource processing apparatus for a live room provided by an embodiment of the present disclosure;
FIG. 7 is a schematic structural diagram of a resource processing device for a live room provided by an embodiment of the present disclosure.

### DETAILED DESCRIPTION

In order that the above-mentioned objects, features and advantages of the present disclosure can be understood more clearly, the solutions of the present disclosure will be further described below. It needs to be noted that without conflict, the embodiments of the present disclosure and the features in the embodiments can be combined with each other.

In the following description, numerous specific details are set forth in order to provide a thorough understanding of the present disclosure, but the present disclosure can also be implemented in other ways different from those described here; apparently, the embodiments in the specification are only part of the embodiments of the present disclosure, and not all embodiments.

With the continuous development of video live technology, people have more and more diverse demands for live-room related functions . Therefore, how to meet users' diverse demands for live-room related functions so as to improve the user experience of live rooms is a technical problem that desperately needs to be solved at present.

In order to solve the aforementioned technical problem, the present disclosure provides a resource processing method for a live room, which makes it convenient for the users to efficiently and accurately use resources and check the effect of resource usage by presenting a resource enabling dynamic effect on a live page upon receiving a trigger operation for a target resource and presenting object change information of a current live room in an object presentation area, thereby improving the user experience of live-room anchors.

Specifically, in order to meet the users' diverse demands for live-room related functions, an embodiment of the present disclosure provides a resource processing method for a live room. Concretely, upon receiving a trigger operation for a target resource, a resource enabling dynamic effect is presented on a live page, which is used to prompt the user that the target resource is currently being enabled; object change information of a current live room is then presented in a preset object presentation area on the live page, wherein the object change information is determined based on the triggered target resource. As is clear, the embodiment of the present disclosure makes it convenient for the users to efficiently and accurately use resources and check the effect of resource usage by presenting a resource enabling dynamic effect on a live page upon receiving a trigger operation for a target resource and presenting object change information of a current live room in an object presentation area, thereby improving the user experience of live-room anchors.

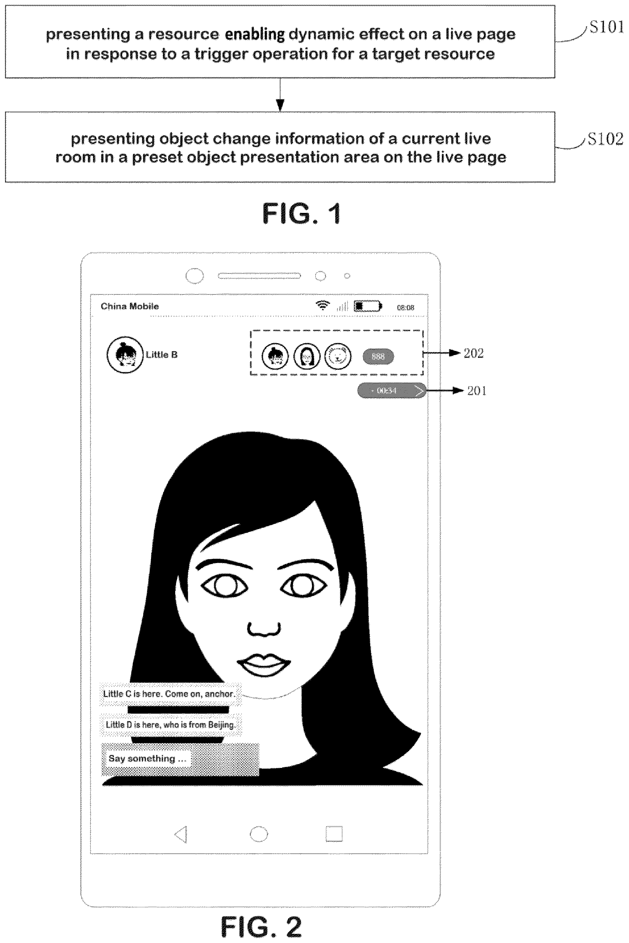

Based on this, an embodiment of the present disclosure provides a resource processing method for a live room, referring to FIG. 1, which is a flowchart of a resource processing method for a live room provided by an embodiment of the present disclosure, the method comprising:
S101: presenting a resource enabling dynamic effect on a live page in response to a trigger operation for a target resource,
wherein the resource enabling dynamic effect is used to prompt that the target resource is currently being enabled.

In the embodiment of the present disclosure, the target resource may be a resource used to increase the amount of object data for an anchor in a live room, and the target resource may be presented in the form of an icon, such as an icon in the form of a card. In addition, the target resource may be any resource corresponding to the current live room. The resource corresponding to the current live room may be obtained by the anchor of the current live room by participating in platform activities and the like, or may be sent to the anchor of the current live room by the users in the current live room (other anchors or viewers), and so on.

In practical application, upon receiving a trigger operation of a user for a target resource, a resource enabling dynamic effect may be presented on a live page to prompt the user (namely, an anchor of a current live room) that the triggered target resource is currently being enabled.

In one implementation, a resource presentation control is provided on a live page. By triggering the resource presentation control, the user triggers the display of a mask layer on the live page, and presents the resources corresponding to the current live room on the mask layer. The embodiment of the present disclosure simplifies interactive operations and shortens the interaction path, and by providing a resource presentation control on the live page, displays a mask layer on the live page in response to triggering the resource presentation control, and presents the resources corresponding to the current live room on the mask layer, thereby making it convenient for users to quickly view and use the corresponding resources, and reducing the interference caused by complex resource viewing and usage paths in the live scenario to the live process and the influence on the anchor's live efficiency.

As shown in FIG. 2, which is a schematic view of a live page provided by an embodiment of the present disclosure, where a resource presentation control 201 is provided on a live page. In order to focus object-related data of a live room on a specific position of the live page, the resource presentation control can be provided at a position on the live page adjacent to an object presentation area 202, such as an upper right corner position of the live page shown in FIG. 2.

In practical application, upon receiving a trigger operation for the resource presentation control shown in FIG. 2, a mask layer may be displayed on the live page, and resources corresponding to the current live room may be presented on the mask layer. In addition, upon receiving a preset sliding operation (such as a left or right sliding operation) for the live page shown in FIG. 2, a mask layer may also be displayed on the live page, and resources corresponding to the current live room may be presented on the mask layer.

In one implementation, upon receiving a trigger operation for a resource presentation control on a live page or a preset sliding operation for the live page, a semi-floating window may be displayed on the live page, and resources corresponding to a current live room may be presented on the semi-floating window. It is worth noting that in the process of presenting the resources corresponding to the current live room on the semi-floating window, live video streams can be played on the live page at the same time, thereby making it convenient for an anchor to view live pictures, especially key interaction information, while viewing and using the resources, reducing the influence of missing live interaction information on the live, and improving the live experience.

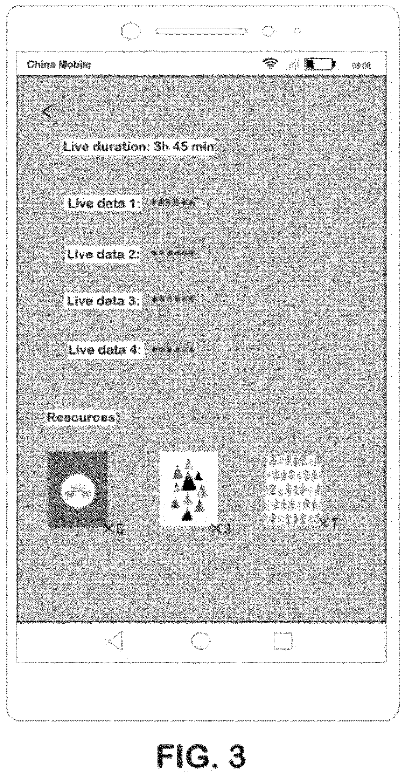

As shown in FIG. 3, it is a schematic diagram of a presentation page of resources corresponding to a current live room provided by an embodiment of the present disclosure, wherein one or more resources are presented on the presentation page of resources. A presentation pattern corresponding to a resource can be directly presented, and a descriptive document corresponding to the resource can also be displayed at the same time. The presentation pattern may be the same as a pattern corresponding to the resource identifier. The same resources can be presented using "×N", where N is used to represent the number of the corresponding resources. In addition, each resource may have a usage period, and different resources may be presented in inverted order according to the expiration date of each resource. As shown in FIG. 3, as presented in inverted order according to the expiration date of each resource, the number corresponding to a first resource is 5, that is, the corresponding value of N is 5, so the number of the second resources is identified by the text "×5"; the number corresponding to a second resource is 3, that is, the corresponding value of N is 3, so the number of the second resources is identified by the text '×3'; the number corresponding to the last resource is 7, that is, the corresponding value of N is 7, so the number of the third resources is identified by the text "×7".

For the presentation page of resources shown in FIG. 3, the user can select any resource as the target resource, and upon receiving a trigger operation for the target resource, the enablement of the target resource can be triggered. At this time, in order to prompt the user that the target resource is currently being enabled, the resource enabling dynamic effect can be presented on the live page.

In one implementation, the resource enabling dynamic effect can exhibit an effect of displacement and reduction to an object presentation area on a live page based on a preset trajectory, thereby making it convenient for an anchor to obtain object change information presented in the object presentation area, making it convenient for a user to understand an acting object of the target resource and promoting the user's application awareness of the target resource.

Specifically, in response to a trigger operation for the target resource, a resource identifier is presented in a preset area on the live page, and the resource identifier is controlled to move from the preset area to the object presentation area.

In practical application, the resource identifier may be a card identifier or a pattern identifier corresponding to the resource. Upon receiving a trigger operation for the target resource, such as a selection operation for the target resource, the resource identifier can be presented in the preset area on the live page. In order to prompt the anchor that object change information will be subsequently presented in the object presentation area on the live page, the resource identifier can be controlled to move from the preset area to the object presentation area. It is worth noting that the resource identifier can disappear after a preset time after moving to the object presentation area.

In one implementation, in order to further achieve the effect that the attention of a live-room anchor is attracted to an object presentation area of a live page so that the anchor can pay attention to object change information presented in the object presentation area, the embodiment of the present disclosure can present, upon receiving a trigger operation for the target resource, an object change prompt dynamic effect in the preset object presentation area on the live page, so as to prompt the user that the object change information starts to be presented.

In one implementation, upon receiving a trigger operation for the target resource, a dynamic effect of the word "START" can be presented in the object presentation area on the live page.

In order to improve the utilization of resources corresponding to the current live room, in the embodiment of the present disclosure, the user can be prompted, at a timing without affecting the user experience, that currently there are available resources, when it is determined that the current live room has corresponding resources.

In one implementation, when it is determined that the current live room has corresponding resources, the user can be prompted that currently there are available resources after live in a current live room has been started for a period of time. Specifically, when it is determined that a live duration of the current live room reaches a preset live duration, a resource prompt dynamic effect can be presented on a live page, so as to prompt the user that currently there are available resources, that is, the resources that can currently be used.

In practical application, a resource presentation control on a live page can present a start duration of the current live room for prompting the anchor the elapsed time since this live has been started. When the start duration of the current live room reaches a preset live duration, the resource prompt dynamic effect can be presented on the resource presentation control on the live page, such as the dynamic effect of the word "START", and at this time, the start duration on the resource presentation control is hidden. After the presentation of the resource prompt dynamic effect is finished, the start duration on the resource presentation control is presented again. In the embodiment of the present disclosure, by presenting the resource prompt dynamic effect on the resource presentation control, the anchor can be promptly and effectively prompted that currently there are available resources.

In another implementation, in response that it is determined that the current live room has corresponding resources, when it is determined that there is fluctuation in object data corresponding to the current live room, the user can be prompted that currently there are available resources. Specifically, when it is determined that objects in the current live room satisfy a preset condition, a resource prompt dynamic effect is presented on the live page for prompting the user that currently there are available resources. The preset condition may include that the number of objects in the current live room is reduced by a preset number, or that the number of objects in the current live room is reduced by a% of the original number of objects, and so on.

S102: presenting object change information of a current live room in a preset object presentation area on the live page,

wherein the object change information is determined based on the target resource.

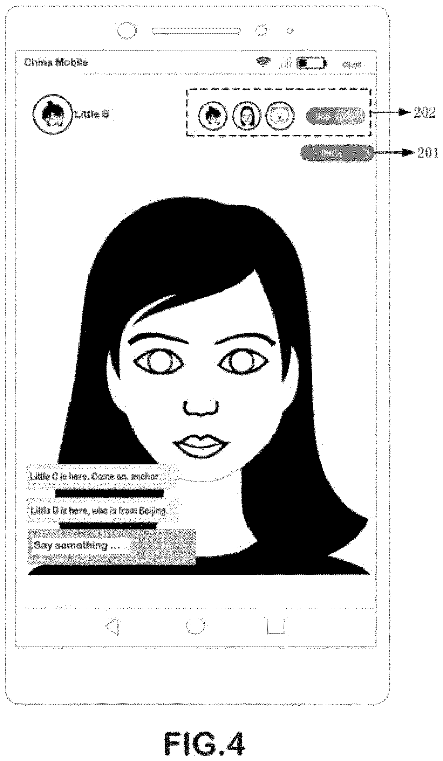

In an embodiment of the present disclosure, an object presentation area is provided on a live page, as shown in FIG. 4, which is a schematic view of another live page provided by an embodiment of the present disclosure. Herein, the object presentation area presents icons of objects corresponding to the current live room, such as avatar logos of viewers in the current live room. In addition, the object presentation area can also present the number of objects corresponding to the current live room, which is also called an object data amount, such as the current number of views in the live room, e.g., "888" as shown in FIG. 2 mentioned above. Further, when the target resource is being applied in the current live room, the object presentation area can also present object change information of the current live room, which is also called object data amount change information, such as the changing number of views or the changed number of views, e.g., "+967" shown in FIG. 4 mentioned above, and at this time, the object change information can be view situation change information of the live room, which is of course not limited to this.

In the embodiment of the present disclosure, after receiving a trigger operation for the target resource, the object change information of the current live room can be presented in the object presentation area on the live page, wherein the object change information is determined based on the triggered target resource. Specifically, after receiving the trigger operation for the target resource, the number of objects corresponding to the current live room will dynamically grow with the application of the target resource.

In one implementation, the object change information of the current live room can be dynamically presented on the live page according to a preset frequency.

In order to further allow the anchor of the current live room to intuitively feel the object data changes brought to the current live room due to the application of the target resource, in the embodiment of the present disclosure, upon receiving a trigger operation for the object presentation area on the live page, a floating window can be displayed on the live page, and object data change trend information of the current live room can be presented on the floating window, which is used to reflect the object data change trend of the current live room before and after the target resource is applied, wherein the object data change trend information can be presented in the form of an object data change trend graph.

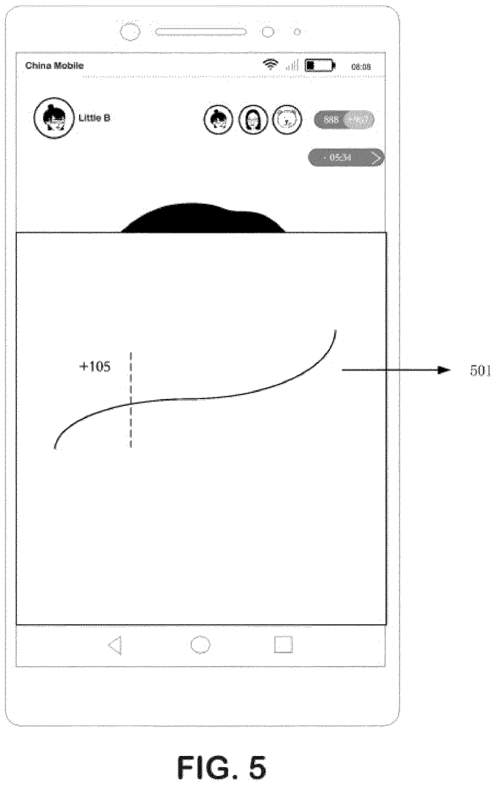

As shown in FIG. 5, it is a schematic diagram of a presentation page of an object data change trend graph provided by an embodiment of the present disclosure, wherein the presentation page can present an object data change trend graph 501 in the form of a change curve. By comparing the object data changes before and after the target resource is applied, it is possible for the user to more intuitively perceive the object data changes caused by enabling the target resource. In addition, the presentation page can also present object data change amount corresponding to different time points, and the user can select a target time point from the object data change trend graph and trigger the display of an object data change amount corresponding to the target time point, such as the object data change amount "+105" corresponding to the target time point shown in FIG. 5, making it convenient for the anchor to subsequently determine the amount of resources selected to be used based on the object data change trend.

In one implementation, since the target resource has a usage duration, when it is determined that an application duration of the target resource reaches a preset application duration threshold (that is, the usage duration corresponding to the target resource), object change information presented in the object presentation area on the live page may be hidden to indicate that the application of the target resource has been terminated or it has expired.

In the above situation, if a trigger operation for the object presentation area on the live page is received, a floating window is presented on the live page, and object growth result data of the current live room is presented on the floating window to characterize the growth of object data of the current live room after the target resource is applied thereto. For example, due to the application of the target resource, the number of objects corresponding to the current live room is increased by N.

In the resource processing method for a live room provided by the embodiment of the present disclosure, upon receiving a trigger operation for a target resource, a resource enabling dynamic effect is presented on a live page, which is used to prompt the user that the target resource is currently being enabled; object change information of a current live room is then presented in a preset object presentation area on the live page, wherein the object change information is determined based on the triggered target resource. As is clear, the embodiment of the present disclosure enables live-room anchors to more intuitively and rapidly obtain object data changes corresponding to a target resource by presenting a resource enabling dynamic effect on a live page upon receiving a trigger operation for the target resource and presenting object change information of a current live room in an object presentation area, thereby improving the use experience of the live-room anchors.

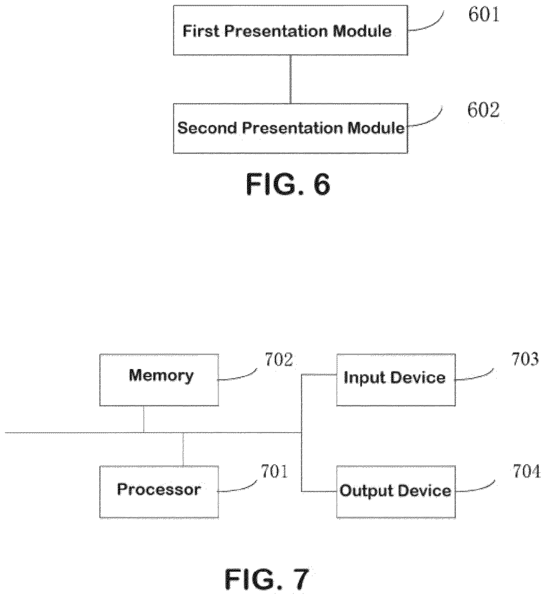

Based on the same inventive concept as the above embodiment, an embodiment of the present disclosure also provides a resource processing apparatus for a live room. Referring to FIG. 6 , it is a schematic structural diagram of a resource processing apparatus for a live room provided by the embodiment of the present disclosure, the apparatus comprising:
a first presentation module 601 configured to present a resource enabling dynamic effect on a live page in response to a trigger operation for a target resource, wherein the resource enabling dynamic effect is used to prompt a user that the target resource is currently being enabled;
a second presentation module 602 configured to present object change information of a current live room in a preset object presentation area on the live page, wherein the object change information is determined based on the target resource.

In one implementation, the apparatus further comprises:
a third presentation module configured to display a mask layer on the live page in response to a trigger operation for a resource presentation control on the live page or a preset sliding operation for the live page, and present resources corresponding to the current live room on the mask layer.

In one implementation, the apparatus further comprises:
a fourth presentation module configured to, where there are resources corresponding to the current live room, present a resource prompt dynamic effect on the live page, when it is determined that a live duration of the current live room reaches a preset live duration or when it is determined that an object of the current live room satisfies a preset condition, wherein the resource prompt dynamic effect is used to prompt the user that there currently exist available resources.

In one implementation, the apparatus further comprises:
a fifth presentation module configured to in response to a trigger operation for the object presentation area, display a floating window on the live page, and present object data change trend information of the current live room on the floating window, wherein the object data change trend information is used to reflect object data change trends of the current live room before and after the target resource is applied thereto.

In one implementation, the apparatus further comprises:
a sixth presentation module configured to in response to the trigger operation for the target resource, present an object change prompt dynamic effect in the preset object presentation area on the live page, wherein the object change prompt dynamic effect is used to prompt the user that the object change information starts to be presented.

In one implementation, the apparatus further comprises:
a hiding module configured to hide the object change information presented in the object presentation area when it is determined that an application duration of the target resource reaches a preset application duration threshold;
a seventh presentation module configured to in response to a trigger operation for the object presentation area, display the floating window on the live page, and present object growth result data of the current live room on the floating window, wherein the object growth result data is used to characterize the growth of object data of the current live room after the target resource is applied thereto.

In one implementation, the first presentation module is specifically configured to:
in response to the trigger operation for the target resource, present a resource identifier in a preset area on the live page, and control the resource identifier to move from the preset area to the object presentation area.

In the resource processing apparatus for a live room provided by the embodiment of the present disclosure, upon receiving a trigger operation for a target resource, a resource enabling dynamic effect is presented on a live page, which is used to prompt the user that the target resource is currently being enabled; object change information of a current live room is then presented in a preset object presentation area on the live page, wherein the object change information is determined based on the triggered target resource. As is clear, the embodiment of the present disclosure makes it convenient for users to efficiently and accurately use resources and check the effect of resource usage by presenting a resource enabling dynamic effect on a live page upon receiving a trigger operation for the target resource and presenting object change information of a current live room in an object presentation area, thereby improving the use experience of the live-room anchors.

In addition to the method and apparatus described above, an embodiment of the present disclosure further provides a computer-readable storage medium storing instructions thereon, wherein the instructions, when executed on a terminal device, cause the terminal device to implement the resource processing method for a live room according to the embodiment of the present disclosure.

An embodiment of the present disclosure further provides a computer program product comprising computer programs/instructions which, when executed by a processor, implement the resource processing method for a live room according to the embodiment of the present disclosure.

In addition, an embodiment of the present disclosure further provides a resource processing apparatus for a live room, as shown in FIG. 7, which may comprise:
a processor 701, a memory 702, an input device 703, and an output device 704. The number of processors 701 in the resource processing device for a live room may be one or more, and one processor is taken as an example in FIG. 7. In some embodiments of the present disclosure, the processor 701, the memory 702, the input device 703 and the output device 704 may be connected through a bus or other means, wherein the connection through a bus is taken as an example in FIG. 7.

The memory 702 may be configured to store software programs and modules, and the processor 701 may process various functional applications and data processing of the resource processing device for a live room by executing the software programs and modules stored in the memory 702. The memory 702 may mainly include a program storage area and a data storage area, wherein the program storage area may store an operating system, an application program required for at least one function, and the like. Further, the memory 702 may include high-speed random access memory, and may also include non-volatile memory, such as at least one magnetic disk storage device, a flash memory device, or other volatile solid-state storage device. The input device 703 may be configured to receive input numeric or character information and to generate signal input related to user settings and function control of the resource processing device for a live room.

Specifically, in this embodiment, the processor 701 loads executable files corresponding to processes of one or more applications into the memory 702 according to the following instructions, and the processor 701 executes the application programs stored in the memory 702, so as to implement various functions of the resource processing device for a live room described above.

It needs to be noted that, in this document, relational terms such as "first" and "second," and the like, are used solely to distinguish one entity or action from another entity or action without necessarily requiring or implying any actual such relationship or order between such entities or actions. Also, the terms "comprises, " "comprising," or any other variation thereof, are intended to cover a non-exclusive inclusion, such that a process, method, article, or device that comprises a list of elements does not include only those elements but may include other elements not expressly listed or inherent to such process, method, article, or device. Without more constraints, an element defined by the phrase "comprising a ..." does not exclude the presence of additional identical elements in the process, method, article, or device that comprises the element.

The foregoing description is only for the purpose of describing specific implementation modes of the present disclosure, so as to enable those skilled in the art to understand or implement the present disclosure. Various modifications to these embodiments will be readily apparent to those skilled in the art, and the generic principles defined herein may be practiced in other embodiments without departing from the spirit or scope of the disclosure. Thus, the present disclosure is not intended to be limited to the embodiments shown herein but is to be accorded the widest scope consistent with the principles and novel features disclosed herein.

## Claims

1. A resource processing method for a live room, the method comprising:
presenting a resource enabling dynamic effect on a live page in response to a trigger operation for a target resource, wherein the resource enabling dynamic effect is used to prompt that the target resource is currently being enabled; and
presenting object change information of a current live room in a preset object presentation area on the live page, wherein the object change information is determined based on the target resource.

2. The method according to claim 1, further comprising, prior to the presenting object change information of a current live room in a preset object presentation area on the live page:
in response to a trigger operation for a resource presentation control on the live page or a preset sliding operation for the live page, displaying a mask layer on the live page, and presenting resources corresponding to the current live room on the mask layer.

3. The method according to claim 1, further comprising:
in response to there existing resources corresponding to the current live room, when it is determined that a live duration of the current live room reaches a preset live duration or when it is determined that an object of the current live room satisfies a preset condition, presenting a resource prompt dynamic effect on the live page, wherein the resource prompt dynamic effect is used to prompt that there currently exist available resources.

4. The method according to claim 1, further comprising, subsequent to the presenting object change information of a current live room in a preset object presentation area on the live page:
in response to a trigger operation for the object presentation area, displaying a floating window on the live page, and presenting object data change trend information of the current live room on the floating window, wherein the object data change trend information is used to reflect object data change trends of the current live room before and after the target resource is applied thereto.

5. The method according to claim 1, further comprising, prior to the presenting object change information of a current live room in a preset object presentation area on the live page:
in response to the trigger operation for the target resource, presenting an obj ect change prompt dynamic effect in the preset obj ect presentation area on the live page, wherein the object change prompt dynamic effect is used to prompt that the object change information starts to be presented.

6. The method according to claim 1, further comprising:
when it is determined that an application duration of the target resource reaches a preset application duration threshold, hiding the object change information presented in the object presentation area; and
in response to a trigger operation for the object presentation area, displaying a floating window on the live page, and presenting object growth result data of the current live room on the floating window, wherein the object growth result data is used to characterize the growth of object data of the current live room after the target resource is applied thereto.

7. The method according to claim 1, wherein presenting a resource enabling dynamic effect on a live page in response to a trigger operation for a target resource comprises:
in response to the trigger operation for the target resource, presenting a resource identifier in a preset area on the live page, and controlling the resource identifier to move from the preset area to the object presentation area.

8. A resource processing apparatus for a live room, the apparatus comprising:
a first presentation module configured to present a resource enabling dynamic effect on a live page in response to a trigger operation for a target resource, wherein the resource enabling dynamic effect is used to prompt that the target resource is currently being enabled; and
a second presentation module configured to present object change information of a current live room in a preset object presentation area on the live page, wherein the object change information is determined based on the target resource.

9. A computer-readable storage medium storing instructions thereon, wherein the instructions, when executed on a terminal device, cause the terminal device to implement the method according to any one of claims 1-7.

10. A device, comprising: a memory, a processor, and a computer program stored on the memory and executable on the processor, wherein the processor, when executing the computer program, implements the method according to any one of claims 1-7.

11. A computer program product comprising computer programs/instructions which, when executed by a processor, implement the method according to any one of claims 1-7.
